# DEMANDE DE BREVET EUROPEEN

(11) **EP 4 395 274 A2**
(43) Date de publication de la demande: **03.07.2024**
(21) Numéro de dépôt: 24168651.8
(22) Date de dépôt: 21.09.2017
(51) Int. Cl.: H04L 51/58

(54) **PROCÉDÉS D'ÉCHANGE DE MESSAGES ET DE GESTION DE MESSAGES, TERMINAL ET SERVEUR DE MESSAGERIE**

(30) Priorité: 23.09.2016 FR 1658948
(62) Demande divisionnaire de: 17784361.2
(71) Demandeur: Orange, 92130 Issy-les-Moulineaux (FR)
(72) Inventeur: LE ROUZIC, Jean Claude, 92326 Chatillon (FR); BAILLY, Marc, 92326 Chatillon (FR); GESTRAUD, Yann, 92326 Chatillon (FR)

(57) **Abrégé**

L'invention concerne la communication par messages. En particulier, l'invention concerne la communication par messages tel que prévu par la norme de téléphonie mobile RCS (Rich Communication Services en anglais).

Un objet de l'invention est un procédé d'échange de messages mis en oeuvre par un terminal d'un utilisateur, le procédé d'échange de messages comporte, lorsque le terminal de l'utilisateur est dans un deuxième mode de transmission pour un terminal d'un contact, un déclenchement d'un basculement du terminal de l'utilisateur dans un premier mode de transmission pour le terminal du contact dès réception d'une notification au terminal de l'utilisateur de connexion au premier mode de transmission du terminal du contact provenant d'un serveur de messagerie sur le premier mode de transmission.

Ainsi, le retour à l'utilisation du premier mode de transmission par le terminal de l'utilisateur ne dépend que d'un seul message : la notification de connexion. Ainsi, les échange pour déterminer les capacités du terminal du contact, sont réduits puisque cette notification étant envoyée uniquement lorsque la connexion du terminal du contact au premier mode de transmission est effective. L'invention permet donc de réduire l'utilisation des ressources.

## Description

L'invention concerne la communication par messages. En particulier, l'invention concerne la communication par messages telle que prévue par la norme de téléphonie mobile RCS (Rich Communication Services en anglais).

L'un des services proposés par la norme de téléphonie mobile RCS est la messagerie enrichie ou « rich messaging » en anglais. Ce service de messagerie permet aux utilisateurs d'échanger des messages textes ou multimédia. Par défaut, la norme RCS, comme d'autres services de messagerie instantanée, est basée sur le protocole IP nécessitant une connexion à un service de transmission par données mobiles, aussi nommée par abus de langage : connexion sur un réseau de données, ou connectivité data.

Le principal inconvénient pour des utilisateurs de téléphone mobile, smartphone... de ce type de messagerie est que la connexion au mode de transmission par données mobiles est souvent fluctuante en raison du caractère nomade des terminaux utilisés pour accéder au service de messagerie sur IP. Par exemple, lorsqu'un terminal d'un utilisateur A envoie un message IP à un terminal d'un utilisateur B, si le téléphone du destinataire B du message IP n'est pas connecté au mode de transmission par données mobiles, le terminal du destinataire B ne recevra pas le message IP qui lui est destiné. C'est pourquoi, la norme RCS prévoit une fonctionnalité de stockage et transfert, dite « Store & Forward » en anglais, qui permet au serveur de messagerie du mode de transmission par données mobiles de conserver le message IP jusqu'à ce que le téléphone du destinataire B retrouve une couverture data, c'est-à-dire qu'il se reconnecte au mode de transmission par données mobiles. Le serveur de messagerie poussera alors le message IP conservé vers le téléphone du destinataire B.

La fonction « Store & Forward » permet donc de palier les couvertures réseaux fluctuantes mais pas l'absence d'accès au mode de transmission par données mobiles pendant une longue période (désactivation de l'utilisation du mode de transmission par données mobiles, notamment en « roaming », c'est-à-dire lorsque le terminal du destinataire B utilise le réseau d'un opérateur partenaire de l'opérateur auprès duquel il s'est abonné, par exemple à l'étranger). En effet, même si le terminal du destinataire B récupère le message IP qui lui était destiné après cette longue période, la messagerie proposée perd de son intérêt puisqu'elle perd son caractère dit « instantané ». Pour cela, la norme RCS a prévu un mode de repli : l'échange des messages par SMS utilisant donc un mode de transmission de repli, en l'occurrence un mode de transmission par le canal de signalisation du réseau de téléphonie mobile ou réseau cellulaire. Ainsi, lorsque le message IP envoyé par le terminal de l'utilisateur A n'est pas transmis au terminal de l'utilisateur B car celui-ci n'est pas connecté au mode de transmission par données mobiles, le terminal de l'utilisateur de A réémet le message sous forme SMS vers le terminal de l'utilisateur B. Le terminal de l'utilisateur A a alors basculé en mode de transmission SMS pour le terminal de l'utilisateur B. Pour éviter que le terminal de l'utilisateur A ne continue à émettre les messages sous forme de SMS même lorsque le terminal de l'utilisateur B se sera reconnecté au mode de transmission par données mobiles, la norme RCS a prévu une vérification de la connexion du terminal de l'utilisateur B par polling. Ainsi, le terminal de l'utilisateur A en mode de transmission SMS pour un terminal d'un utilisateur B, vérifie la connectivité IP du terminal de l'utilisateur B. Pour cela, les deux terminaux effectuent un échange des capacités entre terminaux IP par des messages prédéfinis par la norme RCS dits « SIP OPTIONS » et une analyse des réponses. L'inconvénient de la méthode de polling est qu'elle est consommatrice de ressources.

La politique actuelle de combinaison des services de chat ou messagerie instantanée IP et de SMS (dit « messaging ») selon la norme RCS est basée sur les principes suivants :
- Utilisation du chat comme service de messagerie par défaut vers un terminal du contact Bayant préalablement été découvert comme supportant les services RCS ;
- Repli vers le SMS pour les communications par messages avec le terminal du contact B dès lors qu'un message Chat ou message IP n'a pas pu être délivré au terminal de l'utilisateur B en utilisant le mode de transmission IP avec révocation du message de la base de « Store & Forward » pour éviter tout doublon de message ;
- Lorsque le repli est activé, utilisation des messages SIP OPTIONS ou de tout autre évènement traduisant un retour sous connectivité IP du terminal de l'utilisateur B (par exemple, réception d'un message de Chat provenant du terminal de l'utilisateur B, etc.) pour déterminer quand le retour au service nominal de Chat peut être effectué.

Cette politique permet d'optimiser l'utilisation des messages SIP OPTIONS mais ceux-ci restent néanmoins indispensables.

De manière simplifié, le document « RCS Common Core Service Description Document, version 1.0 » daté du 16 septembre 2014 de GSM Association Non-confidential Official Document RCC.61 décrit plusieurs cas d'usage d'échange de messages entre deux parties : un émetteur 1 et un récepteur B. Le service de messagerie utilisé pour transmettre les messages est fonction des statuts de connectivité de l'émetteur A et du récepteur B. En particulier, si un émetteur A échange au moyen d'une messagerie RCS puis qu'il perd sa connexion IP permettant l'utilisation de la messagerie RCS, les messages seront alors échangés en xMS. Lorsque l'émetteur A récupère sa connexion IP, si le récepteur B a commencé à échanger des messages avec 1 en xMS, alors ce document ne prévoit pas un retour des échanges de messages entre ces deux terminaux en RCS. Dans ce cas, l'échange des messages n'est pas optimisé.

Un des buts de la présente invention est d'apporter des améliorations par rapport à l'état de la technique.

Un objet de l'invention est un procédé d'échange de messages mis en oeuvre par un terminal d'un utilisateur apte à transmettre un message via un mode de transmission parmi en utilisant un mode de transmission parmi un premier mode de transmission et un deuxième mode de transmission, le procédé d'échange de messages comporte, lorsque le terminal de l'utilisateur est dans un deuxième mode de transmission pour un terminal d'un contact, un déclenchement d'un basculement du terminal de l'utilisateur dans un premier mode de transmission pour le terminal du contact dès réception d'une notification, au terminal de l'utilisateur, de connexion au premier mode de transmission du terminal du contact provenant d'un serveur de messagerie sur le premier mode de transmission, la notification de connexion étant émise par le serveur de messagerie au terminal de l'utilisateur dès réception d'un message du terminal du contact via le premier mode de transmission. Ainsi, le retour à l'utilisation du premier mode de transmission par le terminal de l'utilisateur ne dépend que d'un seul message : la notification de connexion. Les échanges pour déterminer les capacités du terminal du contact, sont ainsi réduits puisque cette notification est envoyée uniquement lorsque la connexion du terminal du contact au premier mode de transmission est effective. L'invention permet donc de réduire l'utilisation des ressources. Avantageusement, le basculement est effectué suite à une détection, par le serveur de messagerie, de connexion du terminal du contact au premier mode de transmission. Ainsi, le retour à l'utilisation du premier mode de transmission par le terminal de l'utilisateur ne dépend pas de l'envoi périodique de requêtes sur les capacités du terminal du contact et de l'analyse par le terminal de l'utilisateur d'une réponse du terminal du contact, notamment lors d'une méthode de polling, mais d'une détection de connexion par le serveur de messagerie. L'invention permet donc de réduire l'utilisation des ressources des terminaux et du premier mode de transmission. Avantageusement, le premier mode de transmission est un mode de transmission par données mobiles et le deuxième mode de transmission est un mode de transmission par le canal de signalisation d'un réseau mobile. Ainsi, les échanges de messages sont plus rapides grâce au mode de transmission par données mobiles utilisé comme mode de transmission par défaut et le mode de transmission de repli plus sûr en termes de connectivité pour les terminaux nomades.

Un objet de l'invention est également un dispositif de communication de messages d'un terminal d'un utilisateur, le dispositif de communication apte à transmettre un message via un mode de transmission parmi : un premier mode de transmission et un deuxième mode de transmission, le dispositif de communication comportant un contrôleur apte à déclencher, sur réception d'une notification au terminal de l'utilisateur de connexion au premier mode de transmission d'un terminal d'un contact provenant d'un serveur de messagerie sur le premier mode de transmission, un basculement du terminal de l'utilisateur dans un premier mode de transmission pour le terminal du contact, lorsque le terminal de l'utilisateur est dans un deuxième mode de transmission pour un terminal d'un contact, la notification de connexion étant reçue par le terminal de l'utilisateur du serveur de messagerie dès réception d'un message du terminal du contact via le premier mode de transmission.

Un objet de l'invention est encore un terminal d'un utilisateur comportant un dispositif de communication de messages apte à transmettre un message via un mode de transmission parmi : un premier mode de transmission et un deuxième mode de transmission, le terminal de l'utilisateur comportant un contrôleur apte à déclencher, sur réception d'une notification au terminal de l'utilisateur de connexion au premier mode de transmission d'un terminal d'un contact provenant d'un serveur de messagerie sur le premier mode de transmission, un basculement du terminal de l'utilisateur dans un premier mode de transmission pour le terminal du contact, lorsque le terminal de l'utilisateur est dans un deuxième mode de transmission pour un terminal d'un contact, la notification de connexion étant reçue par le terminal de l'utilisateur du serveur de messagerie dès réception d'un message du terminal du contact via le premier mode de transmission.

Un objet de l'invention est aussi un procédé de gestion de messages mis en oeuvre par un serveur de messagerie sur un premier mode de transmission, le procédé de gestion de messages comporte, lorsqu'un terminal d'un utilisateur est dans un deuxième mode de transmission pour un terminal d'un contact, une émission au terminal de l'utilisateur d'une notification de connexion au premier mode de transmission du terminal du contact dès réception d'un message du terminal du contact via le premier mode de transmission, la notification de connexion déclenchant un basculement du terminal de l'utilisateur dans un premier mode de transmission pour le terminal du contact. Ainsi, le retour à l'utilisation du premier mode de transmission par le terminal de l'utilisateur ne dépend que d'un seul message : la notification de connexion. Ainsi, les échange pour déterminer les capacités du terminal du contact, sont réduits puisque cette notification étant envoyée uniquement lorsque la connexion du terminal du contact au premier mode de transmission est effective. L'invention permet donc de réduire l'utilisation des ressources. Avantageusement, le procédé de gestion de messages comporte, lorsqu'un terminal d'un utilisateur est dans un deuxième mode de transmission pour un terminal d'un contact, une détection d'une connexion au premier mode de transmission du terminal du contact, suite à laquelle l'émission de la notification de connexion est effectuée. Ainsi, le retour à l'utilisation du premier mode de transmission par le terminal de l'utilisateur ne dépend pas de l'envoi périodique de requêtes sur les capacités du terminal du contact et de l'analyse par le terminal de l'utilisateur d'une réponse du terminal du contact, notamment lors d'une méthode de polling, mais d'une détection de connexion par le serveur de messagerie. L'invention permet donc de réduire l'utilisation des ressources des terminaux et du premier mode de transmission.

Avantageusement, la détection de connexion au premier mode de transmission du terminal du contact comporte une détection d'un message provenant du terminal du contact via le premier mode de transmission. Ainsi, tout message sur le premier mode de transmission provenant du terminal du contact détecté par le serveur de messagerie, quel que soit le type de message et le destinataire du message, déclenchera le basculement dans le premier mode de transmission du terminal de l'utilisateur pour l'échange de message avec le terminal du contact. Avantageusement, la détection de connexion au premier mode de transmission du terminal du contact comporte une détection d'une réception par le serveur de messagerie d'un message de commande de suppression d'un message stocké sur le serveur de messagerie, le message de commande provenant du terminal du contact. Ainsi, une tentative d'envoi de message sur le premier mode de transmission du terminal du contact à un terminal d'un interlocuteur détectée par le serveur de messagerie du terminal de l'utilisateur déclenchera le basculement dans le premier mode de transmission du terminal de l'utilisateur pour l'échange de message avec le terminal du contact.

Avantageusement, le procédé de gestion de messages comporte, lorsqu'un terminal d'un utilisateur est dans un deuxième mode de transmission pour un terminal d'un contact, une génération d'une notification de connexion au premier mode de transmission d'un terminal d'un contact d'un terminal d'un utilisateur, la génération de la notification de connexion fournissant la notification de connexion générée à l'émission au terminal de l'utilisateur. Ainsi, la notification de connexion émise pourra être fonction du terminal du contact et/ou du terminal de l'utilisateur. Avantageusement, la génération de notification de connexion est déclenchée par un évènement relatif à une connexion au premier mode de transmission du terminal du contact parmi :
- La détection de connexion au premier mode de transmission du terminal du contact ;
- Un basculement dans un deuxième mode de transmission du terminal de l'utilisateur pour le terminal du contact.

Dans le premier cas, le déclenchement de la génération par la détection de connexion, l'émission pourra être déclenchée indirectement par la détection de connexion en recevant la notification de connexion générée sur commande de cette détection de connexion. Ainsi, la notification générée n'aura pas à être conservée avant son émission. En outre, dans le cas de la première option si le terminal de l'utilisateur n'est pas connecté au premier mode de transmission lors de cette détection et de la deuxième option : basculement dans le deuxième mode de transmission, la notification de connexion pourra être générée de manière non concomitante à son émission. Cela permet de réduire la latence entre la détection de la connexion du terminal du contact au premier mode de transmission et le basculement du terminal de l'utilisateur dans le premier mode de transmission pour le terminal du contact.

Avantageusement, une mise en oeuvre de l'émission de la notification est fonction d'un état de connexion au premier mode de transmission du terminal de l'utilisateur. Ainsi, si le terminal de l'utilisateur n'est pas connecté au premier mode de transmission au moment où la connexion au premier mode de transmission du terminal du contact est détectée, la notification n'est pas émise immédiatement mais uniquement dès que le terminal de l'utilisateur sera reconnecté au premier mode de transmission évitant une perte d'information et donc la conservation du terminal de l'utilisateur dans le deuxième mode de transmission pour le terminal de contact. Avantageusement, selon une implémentation de l'invention, les différentes étapes des procédés selon l'invention sont mises en oeuvre par un logiciel ou programme d'ordinateur, ce logiciel comprenant des instructions logicielles destinées à être exécutées par un processeur de données d'un dispositif faisant partie d'un terminal d'un utilisateur ou d'un serveur de messagerie et étant conçus pour commander l'exécution des différentes étapes de ces procédés. L'invention vise donc aussi un programme comprenant des instructions de code de programme pour l'exécution des étapes du procédé d'échange de messages, et/ou du procédé de gestion de messages lorsque ledit programme est exécuté par un processeur. Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore un serveur de messagerie d'un premier mode de transmission comportant un émetteur permettant d'émettre, lorsqu'un terminal d'un utilisateur est dans un deuxième mode de transmission pour un terminal d'un contact, vers le terminal de l'utilisateur une notification de connexion au premier mode de transmission du terminal du contact dès réception d'un message du terminal du contact via le premier mode de transmission, la notification de connexion déclenchant un basculement du terminal de l'utilisateur dans un premier mode de transmission pour le terminal du contact.

Avantageusement, le serveur de messagerie comporte un détecteur de connexion au premier mode de transmission d'un terminal d'un contact apte à déclencher une émission par l'émetteur de la notification de connexion.

Les caractéristiques et avantages de l'invention apparaîtront plus clairement à la lecture de la description, faite à titre d'exemple, et des figures s'y rapportant qui représentent :
- Figures 1a et 1b, des diagrammes d'échange de messages mettant en oeuvre la norme RCS dans le cas où le terminal de l'utilisateur est, respectivement connecté et déconnecté au premier mode de transmission lorsque le terminal d'un contact se reconnecte au premier mode de transmission, selon l'art antérieur,
- Figure 2, un schéma simplifié d'un procédé d'échange de messages mis en oeuvre par un terminal d'un utilisateur selon l'invention,
- Figure 3, un schéma simplifié d'un procédé de gestion de messages mis en oeuvre par un serveur de messagerie selon l'invention,
- Figure 4, une architecture de communication de messages mettant en oeuvre un terminal d'un utilisateur et un serveur de messagerie selon l'invention,
- Figure 5, un diagramme d'échange de messages dans le cas où le terminal de l'utilisateur est déconnecté du premier mode de transmission lorsque le terminal d'un contact se reconnecte au premier mode de transmission, selon l'invention,
- Figure 6, un diagramme d'échange de messages dans le cas où le serveur de messagerie du terminal de l'utilisateur détecté un message sur le premier mode de transmission du terminal d'un contact, selon l'invention.

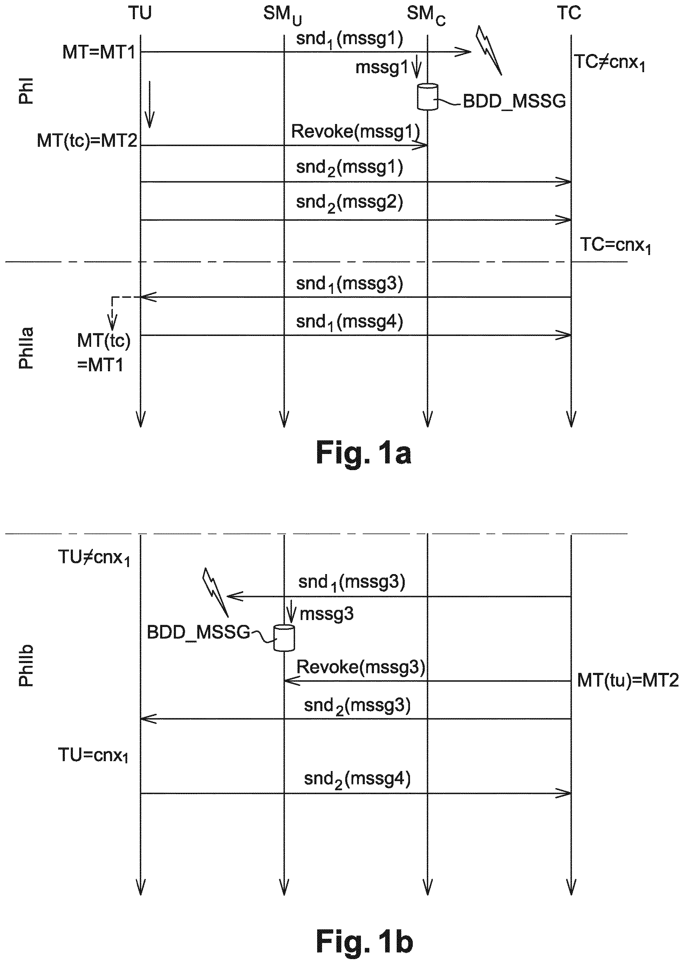

Les figures 1a et 1b illustrent l'art antérieur. En particulier, dans le cas de l'utilisation de la norme RCS sans les SIP OPTIONS. La figure 1a illustre un diagramme d'échange de messages mettant en oeuvre la norme RCS dans le cas où le terminal de l'utilisateur est connecté au premier mode de transmission lorsque le terminal d'un contact se reconnecte au premier mode de transmission, selon l'art antérieur.

Afin de limiter l'utilisation des ressources, notamment par les échanges de capacités des terminaux, notamment par l'usage des SIP OPTIONS tels que prévus par la norme RCS, tout en évitant le blocage d'un terminal d'un utilisateur dans un mode de transmission de repli, la norme RCS prévoit que la réception par le terminal d'un utilisateur d'un message du terminal du contact via le premier mode de transmission déclenche le retour du terminal de l'utilisateur dans un mode de transmission utilisant ce premier mode de transmission pour le terminal du contact.

La figure 1a montre un terminal d'un utilisateur TU échangeant des messages : mssg1, mssg2, mssg3, mssg4 avec un terminal d'un contact TC. La norme RCS prévoit qu'un premier mode de transmission est utilisé comme réseau par défaut pour la transmission de message : le réseau IP et qu'un deuxième mode de transmission comme réseau de repli : réseau SMS. Ainsi, les terminaux RCS sont, par défaut, dans un premier mode de transmission MT=MT1 permettant l'émission de message via le premier mode de transmission. Ainsi, dans un premier temps Ph I comme le montre l'exemple de la figure 1a, le terminal de l'utilisateur TU envoie au terminal d'un contact TC un premier message mssg1 sur le réseau par défaut : le premier mode de transmission, *snd1 (mssg 1).*

Le terminal du contact TC n'étant pas connecté au premier mode de transmission : TC≠cnx₁, le serveur de messagerie du terminal du contact SM_{C} reçoit le premier message mssg1 et le stocke notamment dans une mémoire temporaire ou une base de données de message BDD_MSSG en vue de le transférer au terminal du contact lorsqu'il sera à nouveau connecté au premier mode de transmission. Le terminal de l'utilisateur TU déclenche alors un décompte d'un laps de temps prédéterminé à l'expiration duquel, si le premier message mssg1 n'a pas été transmis par le serveur de messagerie SM_{C} au terminal du contact TC, le terminal de l'utilisateur TU envoie une révocation du transfert du premier message au serveur de messagerie SM_{C :} *Revoke(mssg1).* Ainsi, le premier message mssg1 est supprimé de la mémoire BDD_MSSG du serveur de messagerie SM_{C}. De manière concomitante, le terminal de l'utilisateur TU bascule dans un deuxième mode de transmission pour le terminal du contact MT(tc)=MT2, puis retransmet le premier message via le deuxième mode de transmission (cette fois-ci) : *send2(mssg1),* en l'occurrence sous forme SMS. Quand le terminal de l'utilisateur TU émet un deuxième message mssg2 à destination du terminal du contact TC, il le fait toujours sur le deuxième mode de transmission : *send2(mssg2)* puisque le terminal de l'utilisateur est toujours dans le deuxième mode de transmission pour le terminal du contact MT(tc)=MT2.

Dans un deuxième temps Ph IIa, le terminal du contact s'est reconnecté au premier mode de transmission TC=cnx₁. Si, comme le montre la figure 1a, le terminal du contact TC envoi sur le réseau par défaut, à savoir le premier mode de transmission, un troisième message au terminal de l'utilisateur TU : *snd1(mssg3),* alors la norme RCS prévoit que la réception de ce troisième message provenant du terminal du contact TC sur le premier mode de transmission déclenche le retour du terminal de l'utilisateur dans le premier mode de transmission pour le terminal du contact : MT(tc)=MT1. Ainsi, l'envoi par le terminal de l'utilisateur TU d'un quatrième message au terminal du contact TC se fera en utilisant le premier mode de transmission : *send1(mssg4).*

La figure 1b illustre un diagramme d'échange de messages mettant en oeuvre la norme RCS dans le cas où le terminal de l'utilisateur est déconnecté du premier mode de transmission lorsque le terminal d'un contact se reconnecte au premier mode de transmission, selon l'art antérieur. La première phase Ph I non illustrée correspond à celle de la figure 1a.

Dans un deuxième temps Ph Ilb, le terminal du contact s'est reconnecté au premier mode de transmission TC=cnx₁. Comme le montre la figure 1b, le terminal du contact TC envoi sur le réseau par défaut, à savoir le premier mode de transmission, un troisième message au terminal de l'utilisateur TU : *snd1(mssg3).* Si à ce moment-là, le terminal de l'utilisateur TU est déconnecté du premier mode de transmission TU≠cnx1, alors le troisième message ne sera pas remis au terminal de l'utilisateur TU via le premier mode de transmission. Le terminal de l'utilisateur TU n'étant pas connecté au premier mode de transmission : TU≠cnx₁, le serveur de messagerie du terminal de l'utilisateur SM_{U} reçoit le troisième message mssg3 et le stocke notamment dans une mémoire temporaire ou une base de données de message BDD_MSSG en vue de le transférer au terminal de l'utilisateur TU lorsqu'il sera à nouveau connecté au premier mode de transmission. Le terminal du contact TC déclenche alors un décompte d'un laps de temps prédéterminé à l'expiration duquel, si le troisième message mssg3 n'a pas été transmis par le serveur de messagerie SM_{U} au terminal de l'utilisateur TU, le terminal du contact TC envoie une révocation du transfert du troisième message au serveur de messagerie SM_{U :} *Revoke(mssg3).* Ainsi, le troisième message mssg3 est supprimé de la mémoire BDD_MSSG du serveur de messagerie SM_{U}. De manière concomitante, le terminal du contact TC bascule dans un deuxième mode de transmission pour le terminal de l'utilisateur MT(tu)=MT2, puis retransmet le troisième message via le deuxième mode de transmission (cette fois-ci) : *send2(mssg3),* en l'occurrence sous forme SMS.

Si, le terminal de l'utilisateur TU retrouve alors sa couverture par le premier mode de transmission, c'est-à-dire s'il est à nouveau connecté au premier mode de transmission, alors, sauf à avoir reçu des informations via les messages de SIP OPTIONS prévus par la norme RCS, le terminal de l'utilisateur est bloqué dans le deuxième mode de transmission MT(tc)=MT2 et transmettra un quatrième message en utilisant le deuxième mode de transmission *:send2(mssg4)* alors que les deux terminaux : le terminal de l'utilisateur TU et le terminal du contact TC sont connecté au premier mode de transmission. Ainsi, si pour réduire l'utilisation des ressources, l'utilisation des SIP OPTIONS prévue par la norme RCS est supprimée, le risque est que les terminaux restent bloqués dans le mode de transmission de repli dans certaines situations.

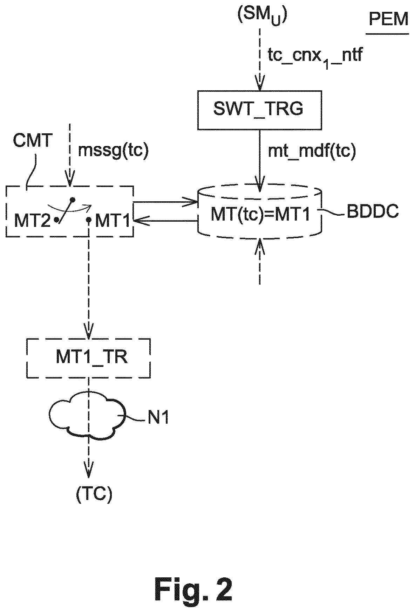

La figure 2 illustre un schéma simplifié d'un procédé d'échange de messages mis en oeuvre par un terminal d'un utilisateur selon l'invention. Le procédé d'échange de messages PEM comporte, lorsque le terminal de l'utilisateur est dans un deuxième mode de transmission pour un terminal d'un contact, un déclenchement d'un basculement SWT_TRG du terminal de l'utilisateur dans un premier mode de transmission pour le terminal du contact MT(tc)=MT1 dès réception d'une notification au terminal de l'utilisateur de connexion au premier mode de transmission MT1, notamment sur un premier réseau N1, du terminal du contact *tc_cnx1_ntf* provenant d'un serveur de messagerie sur le premier mode de transmission SM_{U}.

En particulier, le déclenchement du basculement SWT_TRG est effectué suite à une détection, par le serveur de messagerie SM_{U}, de connexion du terminal du contact TC au premier mode de transmission MT1. En particulier, le premier mode de transmission MT1 est un mode de transmission par données mobiles, notamment un mode de transmission IP et le deuxième mode de transmission MT2 un mode de transmission par le canal de signalisation, notamment d'un réseau cellulaire. Eventuellement, le premier réseau de communication N1 utilisé par le premier mode de transmission MT1 et le deuxième réseau de communication N2 utilisé par le deuxième mode de transmission MT2 sont des réseaux de communication distincts. En particulier, le déclenchement de basculement SWT_TRG envoie une commande de modification du mode de transmission pour le terminal du contact mt_mdf(tc), notamment à une base de données de contact BDDC, dans laquelle le mode de transmission pour chaque terminal d'un contact est stocké au moins lorsque le mode de transmission est le mode de transmission de repli à savoir le deuxième mode de transmission. Le cas échéant, le procédé d'échange comporte, lors de l'émission d'un message à un terminal d'un contact, une consultation de la base de données de contact BDDC permettant de déterminer le mode de transmission du message au terminal du contact.

Lors de la transmission d'un message à un terminal d'un contact, le message est fourni par défaut à une émission selon un premier mode de transmission c'est-à-dire en utilisant le premier mode de transmission MT1. Le procédé d'échange de messages, comporte en particulier, cette émission du message selon le premier mode de transmission. En particulier, lorsque le terminal du contact TC n'est pas connecté au premier mode de transmission MT1, le message mssg est fourni à une émission selon un deuxième mode de transmission MT2_TR c'est à dire utilisant le deuxième mode de transmission MT2. La fourniture du message à l'émission selon le deuxième mode de transmission est effectuée par une commutation CMT de la fourniture du message de l'émission selon le premier mode de transmission MT1_TR à l'émission selon le deuxième mode de transmission MT2_TR en fonction d'un mode de transmission associé au terminal du contact destinataire du message MT(tc) .

En particulier, le procédé d'échange de messages comporte une détection DCNX1_DTCT par le terminal de l'utilisateur TU que le terminal du contact TC n'est pas connecté au premier mode de transmission MT1, notamment par :
- absence de réception d'une notification d'accusé réception ACK, aussi nommé notification de livraison, du message par le terminal du contact TC qui permet au terminal de l'utilisateur TU de savoir que le terminal du contact TC n'est pas connecté au premier mode de transmission MT1,
- réception NACK d'une information de non délivrance au terminal du contact TC d'un message envoyé par le terminal de l'utilisateur TU via le premier mode de transmission MT1.

En particulier, le déclenchement de basculement SWT_TRG envoi la commande de modification de mode de transmission mt_mdf(tc) à la commutation CMT de fourniture de message qui bascule alors de la fourniture de message à l'émission selon le deuxième mode de transmission MT2_TR à l'émission selon le premier mode de transmission MT1_TR pour l'émission d'un message à destination du terminal du contact TC.

Un mode de réalisation particulier du procédé d'échange de messages est un programme comprenant des instructions de code de programme pour l'exécution des étapes du procédé d'échange de messages selon l'une quelconques des revendications lorsque ledit programme est exécuté par un processeur.

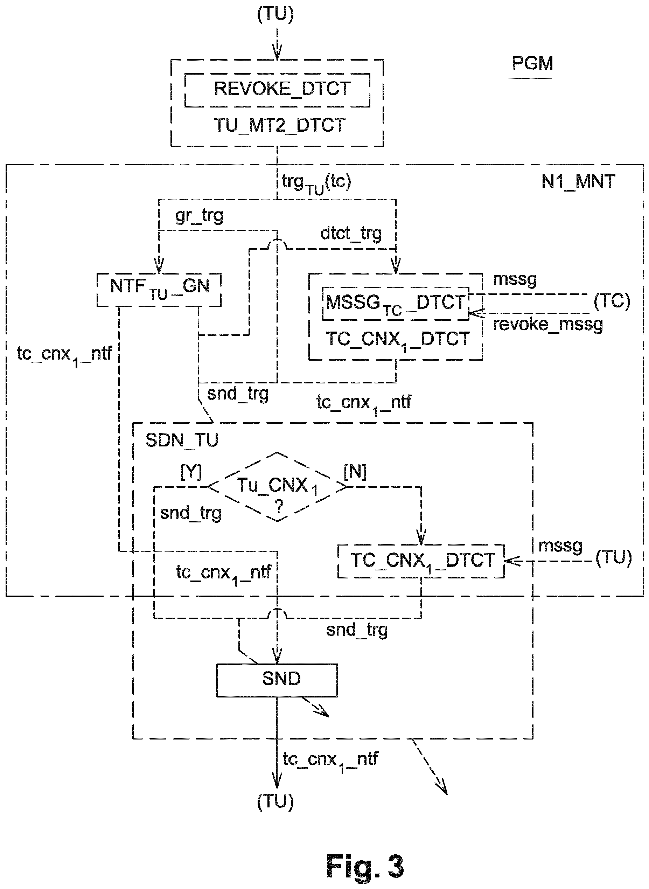

La figure 3 illustre un schéma simplifié d'un procédé de gestion de messages mis en oeuvre par un serveur de messagerie selon l'invention. Le procédé de gestion de messages PGM comporte, lorsqu'un terminal d'un utilisateur TU est dans un deuxième mode de transmission MT2 pour un terminal d'un contact TC, une émission SND au terminal de l'utilisateur TU d'une notification de connexion au premier mode de transmission du terminal du contact tc_cnx1_ntf, la notification de connexion tc_cnx1_ntf déclenchant un basculement SWT_TRG du terminal de l'utilisateur TU dans un premier mode de transmission MT1 pour le terminal du contact TC. En particulier, le procédé de gestion de messages PGM comporte, lorsqu'un terminal d'un utilisateur est dans un deuxième mode de transmission pour un terminal d'un contact, une détection d'une connexion au premier mode de transmission du terminal du contact TC_CNX1_DTCT, suite à laquelle l'émission de la notification de connexion SND est effectuée. En particulier, la détection de connexion au premier mode de transmission du terminal du contact TC_CNX1_DTCT comporte une détection MSSG_{TC}_DTCT d'un message *mssg* provenant du terminal du contact TC via le premier mode de transmission MT1. En particulier, la détection de connexion au premier mode de transmission du terminal du contact TC_CNX1_DTCT comporte une détection MSSG_{TC}_DTCT d'une réception par le serveur de messagerie SM d'un message de commande de suppression d'un message stocké sur le serveur de messagerie *revoke_mssg,* le message de commande *revoke_mssg* provenant du terminal du contact TC. En particulier, le procédé de gestion de messages PGM comporte, lorsqu'un terminal d'un utilisateur est dans un deuxième mode de transmission pour un terminal d'un contact, une génération NTF_{TU}_GN d'une notification de connexion au premier mode de transmission d'un terminal d'un contact *tc_cnx1_ntf* d'un terminal d'un utilisateur TU, la génération de la notification de connexion NTF_{TU}_GN fournissant la notification de connexion générée *tc_cnx1_ntf* à l'émission SND au terminal de l'utilisateur TU.

En particulier, la génération de notification de connexion NTF_{TU}_GN est déclenchée par un évènement relatif à une connexion au premier mode de transmission MT1 du terminal du contact TC parmi :
- La détection de connexion au premier mode de transmission du terminal du contact TC_CNX1_DTCT;
- Un basculement CMT dans un deuxième mode de transmission MT2 du terminal de l'utilisateur TU pour le terminal du contact TC.

La détection de connexion au premier mode de transmission du terminal du contact TC_CNX1_DTCT permet de détecter un évènement relatif à une première connexion ou une reconnexion du terminal du contact TC au premier mode de transmission tel que :
- Un envoi d'un message sur le premier mode de transmission par le terminal du contact à un terminal d'un interlocuteur du contact ;
- Un envoi d'un message de connexion au premier mode de transmission MT1 par le terminal du contact, notamment un message d'enregistrement tel que SIP REGISTER ou Third REGISTER reçu par le serveurs de messagerie SM d'un serveur de contrôle S-CSCF (non illustré), en particulier lorsque le terminal de l'utilisateur TU et le terminal du contact TC partagent le même serveur de messagerie SM;
- Un envoi d'un message de suppression *revoke_mssg* d'un message envoyé par le terminal du contact TC au terminal de l'utilisateur TU sur le premier mode de transmission MT1 ;
- Un envoi d'une notification de connexion du terminal du contact au premier mode de transmission par le serveur de messagerie du contact à destination du serveur de messagerie du terminal d'un utilisateur, etc.

En particulier, une mise en oeuvre de l'émission de la notification au terminal de l'utilisateur SND_TU est fonction d'un état de connexion au premier mode de transmission du terminal de l'utilisateur TU_CNX₁?.

L'émission SND de la notification *tc_cnx1_ntf* est effectuée lorsque le terminal de l'utilisateur TU est dans un deuxième mode de transmission MT2 pour le terminal du contact TC. En particulier, le procédé de gestion de messages PGM reçoit du terminal de l'utilisateur une information indiquant le basculement du terminal de l'utilisateur TU dans le deuxième mode de transmission MT2 pour le terminal du contact TC. De manière alternative, le procédé de gestion de messages PGM détermine si le terminal de l'utilisateur TU est dans un deuxième mode de transmission MT2 pour le terminal du contact TC. Notamment, le procédé de gestion de messages PGM comporte une détection du basculement du terminal de l'utilisateur dans le deuxième mode de transmission TU_MT2_DTCT. Par exemple, la détection du basculement dans le deuxième mode de transmission TU_MT2_DTCT comporte une détection REVOKE_DTCT des messages de révocation ou de suppression des messages stockés provenant du terminal de l'utilisateur TU. Ainsi, la détermination du basculement dans le deuxième mode de transmission MT2 d'un terminal d'un utilisateur TU pour un terminal d'un contact TC: réception d'une information de basculement, détection du basculement TU_MT2_DTCT déclenche *trgTU(tc)* une surveillance du premier mode de transmission N1_MNT déclenchant l'émission SND d'une notification de connexion au premier mode de transmission du terminal du contact *tc_cnx1_ntf.* Cette surveillance du premier mode de transmission N1_MNT comporte au moins une détection TC_CNX₁_DTCT de connexion du terminal du contact au premier mode de transmission.

En particulier, la détermination du basculement dans le deuxième mode de transmission MT2 d'un terminal d'un utilisateur TU pour un terminal d'un contact TC: réception d'une information de basculement, détection du basculement TU_MT2_DTCT déclenche *trgTU(tc)* la génération de notification de connexion NTF_{TU}_GN, qui déclenche *dtct_trg,* elle-même, la détection TC_CNX₁_DTCT de connexion du terminal du contact au premier mode de transmission. Dans cette option, le délai entre la connexion au premier mode de transmission du terminal du contact et le basculement du terminal de l'utilisateur dans le premier mode de connexion pour le terminal du contact est optimisé puisque réduit du temps de génération de la notification de connexion NTF_{TU}_GN. Dans ce cas, c'est la détection TC_CNX₁_DTCT de connexion du terminal du contact au premier mode de transmission qui déclenche *snd_trg* directement ou indirectement l'émission SND au terminal de l'utilisateur TU de la notification *tc_cnx1_ntf* fournie par la génération de notification de connexion NTF_{TU}_GN.

De manière alternative, la détermination du basculement dans le deuxième mode de transmission MT2 d'un terminal d'un utilisateur TU pour un terminal d'un contact TC: réception d'une information de basculement, détection du basculement TU_MT2_DTCT déclenche *trgTU(tc)* la détection TC_CNX₁_DTCT de connexion du terminal du contact au premier mode de transmission, qui déclenche *dtct_trg,* elle-même, la génération de notification de connexion NTF_{TU}_GN. Ainsi, les ressources de stockage du serveur de messagerie SM sont optimisées puisque la notification de connexion tc_cnx₁_ntf n'est stockée que si le terminal de l'utilisateur TU n'est pas connecté au premier mode de transmission MT1 lors de la génération de la notification de connexion NTF_{TU}_GN. Dans ce cas, c'est la génération de notification de connexion NTF_{TU}_GN qui fournit la notification de connexion *tc_cnx1_ntf* et déclenche *snd_trg* directement ou indirectement son émission SND au terminal de l'utilisateur TU.

Dans le cas d'un déclenchement indirect *snd_trg* de l'émission SND, c'est une émission à un terminal d'un utilisateur SND_TU qui est déclenchée *snd_trg* directement soit par la détection de connexion TC_CNX1_DTCT, soit par la génération de notification de connexion NTFTU_GN, soit par la surveillance du premier mode de transmission N1_MNT. Notamment, l'émission au terminal de l'utilisateur SND_TU comporte l'émission SND de la notification de connexion *tc_cnx1_ntf* au terminal de l'utilisateur TU. Eventuellement, l'émission au terminal de l'utilisateur SND_TU comporte, en outre, une vérification de la connexion du terminal de l'utilisateur au premier mode de transmission TU_CNX1?. Si la connexion du terminal de l'utilisateur au premier mode de transmission TU_CNX1? est vérifiée [Y], c'est-à-dire si le terminal de l'utilisateur TU est connecté au premier mode de transmission MT1, alors la vérification TU_CNX1? déclenche *snd_trg* l'émission SND au terminal de l'utilisateur TU de la notification de connexion *tc_cnx1_ntf* fournie par la génération de notification de connexion NTF_{TU}_GN. Si la connexion du terminal de l'utilisateur au premier mode de transmission TU_CNX1? n'est pas vérifiée [N], c'est-à-dire si le terminal de l'utilisateur TU n'est pas connecté au premier mode de transmission MT1, alors la vérification TU_CNX1? déclenche une détection de connexion du terminal de l'utilisateur au premier mode de transmission TU_CNX1_DTCT. Notamment, la réception par le serveur de messagerie d'un message *mssg* provenant du terminal de l'utilisateur TU via le premier mode de transmission MT1 permet de détecter une telle connexion au premier mode de transmission. Le message est, par exemple, un message d'enregistrement sur le premier mode de transmission MT1, tel que SIP REGISTER. La détection de connexion du terminal de l'utilisateur au premier mode de transmission TU_CNX1_DTCT déclenche *snd_trg* l'émission SND au terminal de l'utilisateur TU de la notification de connexion *tc_cnx1_ntf* fournie par la génération de notification de connexion NTF_{TU}_GN, et éventuellement stockée dans une mémoire du serveur de messagerie. En particulier, la surveillance du premier mode de transmission N1_MNT comporte aussi la vérification TU_CNX1? et, si la connexion du terminal de l'utilisateur au premier mode de transmission TU_CNX1? n'est pas vérifiée [N], la détection de connexion du terminal de l'utilisateur au premier mode de transmission TU_CNX1_DTCT.

Un exemple de réalisation du procédé de gestion de message pourrait utiliser, comme émission de notification de connexion, la fourniture, aussi nommé fonction « push » en anglais, d'un procédé de stockage et transfert mis en oeuvre par le serveur de messagerie, notamment la fonction « store&forward » ou « push enabler » telle que prévue dans certaine norme : ex. la norme RCS, OMA, etc. Ainsi, la fonction de fourniture ou « push » pourrait envoyée en plus des messages stockés par le serveur de messagerie, notamment dans l'attente d'une reconnexion du terminal du destinataire, un nouveau type de contenu à savoir les notifications *tc_cnx1_nft* de connexion des contacts au premier mode de transmission telles que prévues par l'invention. En outre, si nécessaire, le stockage du procédé de stockage et transfert mis en oeuvre par le serveur de messagerie, notamment la fonction « store&forward » ou « push enabler » telle que prévue dans certaine norme : ex. la norme RCS, OMA, etc. pourra être utilisé pour conserver la notification de connexion générée par le procédé de gestion de message dans l'attente du déclenchement de l'émission de la notification de connexion.

Dans le cas où le terminal de l'utilisateur TU et le terminal du contact TC ne partagent pas le même serveur de messagerie SM, le serveur de messagerie du terminal du contact SM_{C} peut mettre en oeuvre une détection de connexion du contact au premier mode de transmission TC_CNX₁_DTCT déclenchant une émission SND d'une notification de connexion du terminal du contact TC au premier mode de transmission MT1. L'émission par le serveur de messagerie du contact SM_{C} au premier mode de transmission est effectuée à destination du serveur de messagerie du terminal d'un utilisateur SM_{U} ayant basculé dans un deuxième mode de transmission MT2 pour le terminal du contact TC. Une réception par le serveur de messagerie du terminal de l'utilisateur SM_{U} de la notification de connexion du terminal du contact au premier mode de transmission *tc_cnx1_ntf, tc_cnx1_ntf** constitue, notamment, la détection de connexion du terminal du contact au premier mode de transmission TC_CNX₁_DTCT par le serveur de messagerie du terminal de l'utilisateur SM_{U} déclenchant l'émission SND, par le serveur de messagerie du terminal de l'utilisateur SM_{U}, d'une notification de connexion du terminal du contact au premier mode de transmission *tc_cnx1_ntf.* La notification de connexion *tc_cnx1_ntf* est émise par le serveur de messagerie du terminal de l'utilisateur SM_{U} à destination du terminal de l'utilisateur TU déclenchant le basculement dans le premier mode de transmission SWT_TRG du terminal de l'utilisateur TU pour le terminal du contact TC. En particulier, soit le serveur de messagerie du terminal de l'utilisateur SM_{U} relaie la notification de connexion reçue *tc_cnx1_ntf* du serveur de messagerie du terminal du contact SM_{C}, soit le serveur de messagerie du terminal de l'utilisateur SM_{U} génère NTF_{TU}_GN une nouvelle notification de connexion *tc_cnx1_ntf* suite à la réception de la notification de connexion reçue *tc_cnx1_ntf* * du serveur de messagerie du terminal du contact SM_{C}, aussi appelée notification inter-opérateur *tc_cnx1_ntf*.*

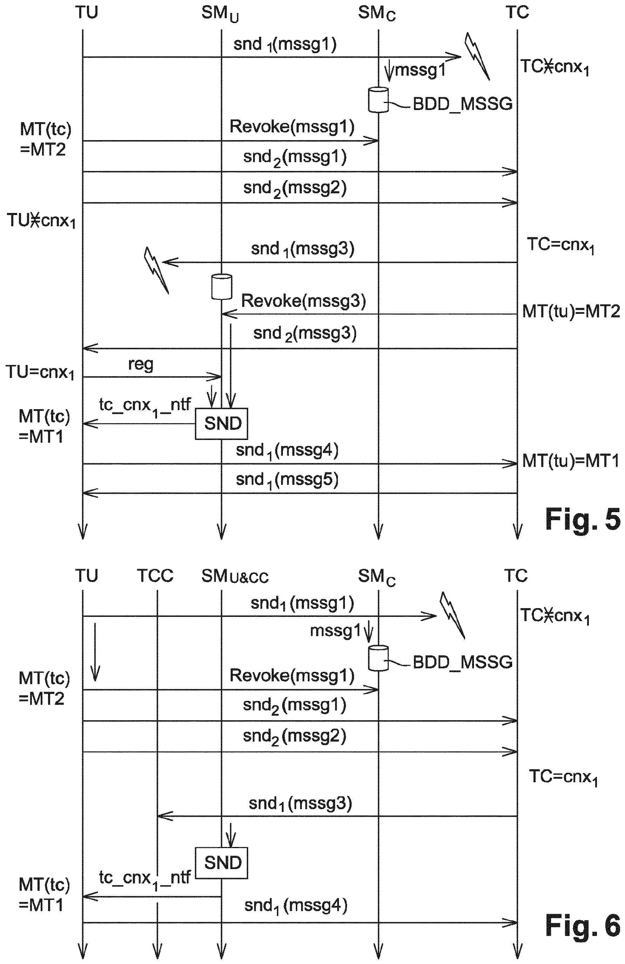

A noter : le procédé de gestion de messages PGM peut aussi être mis en oeuvre par le serveur de messagerie du terminal du contact SM_{C} (cf. figures 5, 6), et le procédé d'échange de messages PEM par le terminal du contact TC qui devient alors le terminal de l'utilisateur revendiqué. Ainsi, la description et les revendications seront lues en remplaçant le terminal de l'utilisateur par le terminal du contact et, inversement, le terminal du contact par le terminal de l'utilisateur.

Un mode de réalisation particulier du procédé de gestion de messages est un programme comprenant des instructions de code de programme pour l'exécution des étapes du procédé de gestion de messages selon l'une quelconques des revendications lorsque ledit programme est exécuté par un processeur.

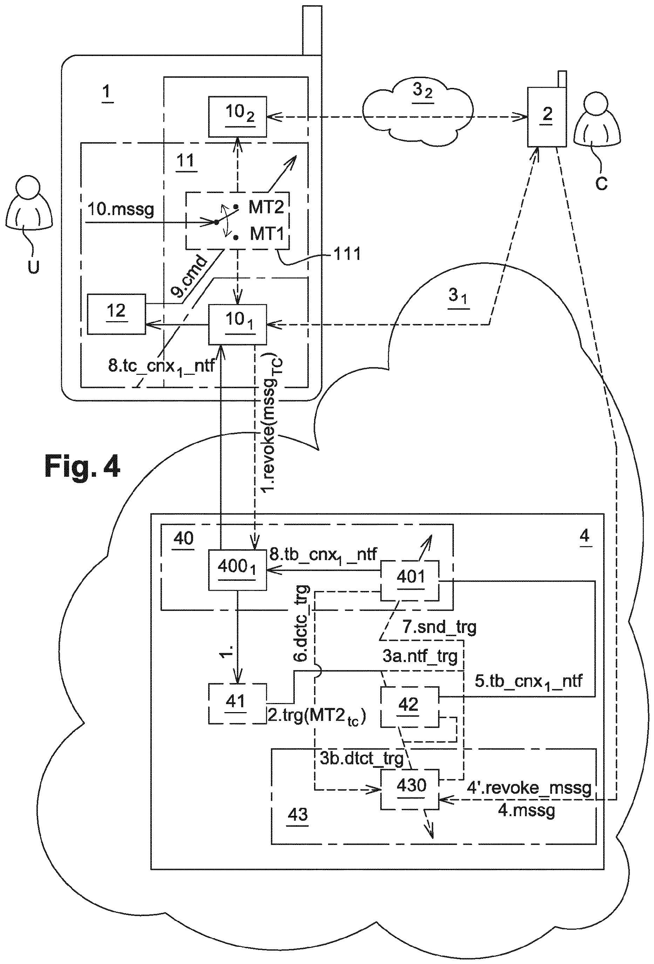

La figure 4 illustre une architecture de communication de messages mettant en oeuvre un terminal d'un utilisateur et un serveur de messagerie selon l'invention. Un objet de l'invention est un dispositif de communication de messages 11. Le dispositif de communication de messages 11 est implémenté dans un terminal 1 d'un utilisateur U. Le dispositif de communication 11 transmet un message *mssg* via un mode de transmission 3₁, 3₂ parmi : un premier mode de transmission 3₁ et un deuxième mode de transmission 3₂. Le dispositif de communication 11 comporte un contrôleur 12 déclenchant *cmd,* sur réception d'une notification *tc_cnx1_ntf* au terminal de l'utilisateur 1 de connexion au premier mode de transmission du terminal du contact provenant d'un serveur de messagerie 4 sur le premier mode de transmission 3₁, un basculement du terminal de l'utilisateur 1 dans un premier mode de transmission 3₁ pour un terminal 2 d'un contact C, lorsque le terminal de l'utilisateur 1 est dans un deuxième mode de transmission 3₂ pour le terminal du contact 2. En particulier, le dispositif de communication de messages 11 comporte un commutateur 111 permettant de fournir un message à un premier transmetteur 10₁, c'est-à-dire un transmetteur sur un premier mode de transmission, ou un deuxième transmetteur 10₂, c'est-à-dire un transmetteur sur un deuxième mode de transmission, en fonction du mode de transmission du commutateur 111, respectivement le premier mode de transmission 3₁ ou le deuxième mode de transmission 3₂. Le contrôleur 12 commande *cmd* alors, sur réception d'une notification *tc_cnx1_ntf* de connexion au premier mode de transmission du terminal du contact, le basculement du commutateur 111 dans un premier mode de transmission 3₁ lors de l'émission d'un message à destination du terminal du contact 2.

Eventuellement, le dispositif de communication de messages 11 comporte une base de données de contact 12 (non illustrée). Soit, sont inscrits, dans cette base de données de contact 12, au moins les terminaux des contacts 2 lorsqu'ils ne sont pas connectés au premier mode de transmission 3₁. Dans ce cas, le commutateur 111 est, par défaut dans le premier mode de transmission, et consulte, pour le terminal du contact 2 auquel le message *mssg* est destiné, la base de données de contact 12. Si le terminal du contact 2 est inscrit dans la base 12, le commutateur 12 bascule dans le deuxième mode de transmission 3₂. Alors, sur réception d'une notification *tc_cnx1_ntf* de connexion au premier mode de transmission du terminal du contact, le contrôleur 12 commande *cmd* la suppression du terminal du contact 2 da la base de données 12, basculant le terminal de l'utilisateur 1 dans le premier mode de transmission pour le terminal du contact 2. Ainsi, le commutateur 111 consultant, pour le terminal du contact 2 auquel un message *mssg* est destiné, la base de données de contact 12 et n'y trouvant pas le terminal du contact 2, reste, par défaut, dans le premier mode de transmission 3₁ pour l'émission du message à destination du terminal du contact 2. Soit, sont inscrits, dans cette base de données de contact 12, les terminaux 2 de tous les contacts du terminal de l'utilisateur quelles que soient leurs connexions, et pour chaque terminal d'un contact 2, lui est associé un mode de transmission : par défaut, le premier mode de transmission 3₁ et, lorsque le terminal du contact 2 n'est pas connecté au premier mode de transmission 3₁, le deuxième mode de transmission 3₂. Dans ce cas, lorsque le terminal de l'utilisateur 1 est dans un deuxième mode de transmission pour un terminal d'un contact 2, c'est-à-dire lorsque le mode de transmission associé au terminal du contact 2 est le deuxième mode de transmission 3₂ dans la base de données de contact 12, sur réception d'une notification *tc_cnx1_ntf* de connexion au premier mode de transmission du terminal du contact, le contrôleur 12 commande *cmd* la modification du mode de transmission associé au terminal du contact 2 dans la base de données 12, basculant le terminal de l'utilisateur 1 dans le premier mode de transmission pour le terminal du contact 2. Ainsi, le commutateur 111 consultant, pour le terminal du contact 2 auquel un message *mssg* est destiné, la base de données de contact 12 et y lit que le mode de transmission associé au terminal du contact 2 est le premier mode de transmission, et reste dans le mode de transmission par défaut : le premier mode de transmission 3₁ pour l'émission du message à destination du terminal du contact 2.

En particulier, le dispositif de communication de messages 11 comporte un transmetteur de messages sur un premier mode de transmission 10₁ et un transmetteur de messages sur un deuxième mode de transmission 10₂.

Un autre objet de l'invention est un terminal d'un utilisateur 1 qui comporte :
- un dispositif de communication de messages 11 transmettant un message *mssg* via un mode de transmission parmi : un premier mode de transmission 3₁ et un deuxième mode de transmission3₂ ; et
- un contrôleur 12 déclenchant *cmd,* sur réception d'une notification *tc_cnx1_ntf* au terminal de l'utilisateur 1 de connexion au premier mode de transmission du terminal du contact provenant d'un serveur de messagerie 4 sur le premier mode de transmission 3₁, un basculement du terminal de l'utilisateur 1 dans un premier mode de transmission 3₁ pour un terminal d'un contact 2, lorsque le terminal de l'utilisateur 1 est dans un deuxième mode de transmission 3₂ pour le terminal du contact 2.

Ainsi, le contrôleur 12 est soit implémenté directement dans le terminal de l'utilisateur 1 soit dans le dispositif de communication de messages 11 comme décrit ci-dessus.

En particulier, le dispositif de communication de messages 11 comporte un commutateur 111 permettant de fournir un message à un premier transmetteur 10₁, c'est-à-dire un transmetteur sur un premier mode de transmission, ou un deuxième transmetteur 10₂, c'est-à-dire un transmetteur sur un deuxième mode de transmission, en fonction du mode de transmission du commutateur 111, respectivement le premier mode de transmission 3₁ ou le deuxième mode de transmission 3₂. Le contrôleur 12 commande *cmd* alors, sur réception d'une notification *tc_cnx1_ntf* de connexion au premier mode de transmission du terminal du contact, le basculement du commutateur 111 dans un premier mode de transmission 3₁ lors de l'émission d'un message à destination du terminal du contact 2. Eventuellement, le terminal de l'utilisateur 1 ou le dispositif de communication de messages 11 du terminal de l'utilisateur 1 comporte une base de données de contact 12 (non illustrée) telle que décrite précédemment. En particulier, le terminal de l'utilisateur 1 comporte un transmetteur de messages sur un premier mode de transmission 10₁ et un transmetteur de messages sur un deuxième mode de transmission 10₂ soit implémenté directement dans le terminal de l'utilisateur 1 soit dans le dispositif de communication 11 du terminal de l'utilisateur 1.

L'architecture de communication comporte outre :
- un terminal 1 d'un utilisateur U,
- un terminal 2 d'un contact C, et
- deux modes de transmission 3₁ et 3₂ permettant, chacun, de transmettre des messages entre le terminal de l'utilisateur 1 et le terminal du contact 2 lorsqu'ils sont connectés à un réseau de communication, éventuellement, les deux modes de transmission permettent de transmettre des messages sur un même réseau de communication ou deux réseaux de communication distincts ;
- au moins un serveur de messagerie 4 sur le premier mode de transmission 3₁.

Le serveur de messagerie 4 d'un premier mode de transmission 3₁ comporte un émetteur 400, permettant d'émettre, lorsqu'un terminal d'un utilisateur 1 est dans un deuxième mode de transmission 32 pour un terminal d'un contact 2, vers le terminal de l'utilisateur 1 une notification de connexion au premier mode de transmission du terminal du contact *8.tc_cnx1_ntf,* la notification de connexion *8.tc_cnx1_ntf* déclenchant *9.cmd* un basculement du terminal de l'utilisateur 1 dans un premier mode de transmission 3₁ pour le terminal du contact 2. En particulier, le serveur de messagerie 4 comporte un détecteur 430 de connexion au premier mode de transmission d'un terminal d'un contact déclenchant une émission par l'émetteur 400, de la notification de connexion *8.tc_cnx1_ntf.* En particulier, le détecteur 430 de connexion au premier mode de transmission du terminal du contact TC_CNX1_DTCT comporte un détecteur 4301 (non illustré) d'un message *4.mssg* provenant du terminal du contact 2 via le premier mode de transmission 3₁. En particulier, le détecteur 430 de connexion au premier mode de transmission du terminal du contact comporte un détecteur 4302 (non illustré) d'une réception par le serveur de messagerie 4 d'un message de commande de suppression d'un message stocké sur le serveur de messagerie *4'.revoke_mssg,* le message de commande *4'.revoke_mssg* provenant du terminal du contact TC.

En particulier, le serveur de messagerie 4 comporte un générateur 42 d'une notification de connexion au premier mode de transmission d'un terminal d'un contact *5.tc_cnx1_ntf* d'un terminal d'un utilisateur 1. Le générateur 42 est mis en oeuvre lorsqu'un terminal d'un utilisateur 1 est dans un deuxième mode de transmission 3₂ pour un terminal d'un contact 2. Le générateur 42 de la notification de connexion fournit la notification de connexion générée *5.tc_cnx1_ntf* à l'émetteur 400, pour être transmise au terminal de l'utilisateur TU.

En particulier, le générateur 42 de notification de connexion est déclenché par un détecteur d'un évènement relatif à une connexion au premier mode de transmission 3₁ du terminal du contact TC parmi :
- un détecteur 430 de connexion au premier mode de transmission du terminal du contact 2;
- un détecteur de déconnexion du premier mode de transmission du terminal du contact (non illustré) ;
- Un détecteur 41 du basculement dans un deuxième mode de transmission 3₂ du terminal de l'utilisateur 1 pour le terminal du contact 2, par exemple un détecteur de réception d'un message *1.revoke(mssg_{TC})* de révocation d'un message du terminal de l'utilisateur à destination du terminal du contact.

Le détecteur 430 de connexion au premier mode de transmission du terminal du contact permet de détecter un évènement relatif à une première connexion ou une reconnexion du terminal du contact TC au premier mode de transmission tel que :
- Un envoi d'un message *4.mssg* sur le premier mode de transmission par le terminal du contact à un terminal d'un interlocuteur du contact ;
- Un envoi d'un message de connexion au premier mode de transmission 3₁ par le terminal du contact, notamment un message d'enregistrement tel que SIP REGISTER, lorsque le terminal de l'utilisateur 1 et le terminal du contact 2 partagent le même serveur de messagerie 4;
- Un envoi d'un message de suppression *4'.revoke_mssg* d'un message envoyé par le terminal du contact 2 au terminal de l'utilisateur TU sur le premier mode de transmission 3₁ ; etc.

En particulier, le serveur de messagerie 4 comporte un fournisseur 401 de la notification de connexion à l'émetteur sur le premier mode de transmission 400, activé en fonction d'un état de connexion au premier mode de transmission du terminal de l'utilisateur 1.

Dans l'exemple illustré, l'émetteur au terminal de l'utilisateur 40 comporte l'émetteur sur le premier mode de transmission 400, et un fournisseur 401 de la notification de connexion à l'émetteur sur le premier mode de transmission 400, activé en fonction d'un état de connexion au premier mode de transmission du terminal de l'utilisateur 1. Ainsi, l'émetteur de la notification au terminal de l'utilisateur 40 (non illustré) est activé en fonction d'un état de connexion au premier mode de transmission du terminal de l'utilisateur 1. L'émetteur sur le premier mode de transmission 400, transmet la notification *tc_cnx1_ntf* lorsque le terminal de l'utilisateur 1 est dans un deuxième mode de transmission 3₂ pour le terminal du contact 2. En particulier, le serveur de messagerie 4 reçoit du terminal de l'utilisateur 1 une information, tel qu'un message de révocation *1.revoke(mssgTC),* indiquant le basculement du terminal de l'utilisateur TU dans le deuxième mode de transmission 3₂ pour le terminal du contact TC.

De manière alternative, le serveur de messagerie 4 détermine si le terminal de l'utilisateur 1 est dans un deuxième mode de transmission 3₂ pour le terminal du contact 2. Notamment, le serveur de messagerie 4 comporte un détecteur 41 du basculement du terminal de l'utilisateur dans le deuxième mode de transmission. Par exemple, le détecteur 41 du basculement dans le deuxième mode de transmission comporte un détecteur des messages de révocation ou de suppression des messages stockés provenant du terminal de l'utilisateur 1. Ainsi, le détecteur 41 déterminant un basculement dans le deuxième mode de transmission 3₂ d'un terminal d'un utilisateur 1 pour un terminal d'un contact 2: réception d'une information de basculement, détection du basculement déclenche *2.trg(MT2_{TC})* un moniteur du premier mode de transmission 43 (non illustré) déclenchant une émission par l'émetteur sur le premier mode de transmission 400₁ d'une notification de connexion au premier mode de transmission du terminal du contact *8.tc_cnx1_ntf.* Ce moniteur du premier mode de transmission 43 comporte au moins un détecteur 430 de connexion du terminal du contact au premier mode de transmission.

En particulier, le détecteur 41 du basculement dans le deuxième mode de transmission 3₂ d'un terminal d'un utilisateur 1 pour un terminal d'un contact 2: réception d'une information de basculement, détection du basculement déclenche *2.trg(MT2_{TC})* le générateur 42 de notification de connexion, qui déclenche *3b.dtdt_trg,* lui-même, le détecteur 430 de connexion du terminal du contact au premier mode de transmission. Dans ce cas, c'est le détecteur 430 de connexion du terminal du contact au premier mode de transmission qui déclenche *7.snd_trg* directement ou indirectement la transmission par l'émetteur sur le premier mode de transmission 400, au terminal de l'utilisateur 1 de la notification *8.tc_cnx1_ntf* fournie par le générateur 42 de notification de connexion. De manière alternative, le détecteur 41 déterminant un basculement dans le deuxième mode de transmission 3₂ d'un terminal d'un utilisateur 1 pour un terminal d'un contact 2: réception d'une information de basculement, détection du basculement déclenche *2.trg(MT2_{TC})* le détecteur 430 de connexion du terminal du contact au premier mode de transmission, qui déclenche 3a. *ntf_trg,* lui-même, le générateur 42 de notification de connexion. Dans ce cas, c'est le générateur 42 de notification de connexion qui fournit la notification de connexion *5.tc_cnx1_ntf* et déclenche *7.snd_trg* directement ou indirectement la transmission par l'émetteur sur le premier mode de transmission 400, au terminal de l'utilisateur 1 de la notification *8.tc_cnx1_ntf.*

Dans le cas d'un déclenchement indirect *7.snd_trg* de l'émetteur sur le premier mode de transmission 400₁, c'est l'émetteur à un terminal d'un utilisateur 401 qui est déclenchée *7.snd_trg* directement soit par le détecteur 430 de connexion, soit par le générateur 42 de notification de connexion, soit par le moniteur du premier mode de transmission 43. Notamment, l'émetteur au terminal de l'utilisateur 40 comporte l'émetteur sur le premier mode de transmission 400, de la notification de connexion *tc_cnx1_ntf* au terminal de l'utilisateur 1. Eventuellement, l'émetteur au terminal de l'utilisateur 40 comporte, en outre, un analyseur de connexion 401 vérifiant la connexion du terminal de l'utilisateur au premier mode de transmission. Si la connexion du terminal de l'utilisateur au premier mode de transmission est vérifiée, c'est-à-dire si le terminal de l'utilisateur 1 est connecté au premier mode de transmission 3₁, alors l'analyseur 401 déclenche la transmission par l'émetteur sur le premier mode de transmission 400, au terminal de l'utilisateur 1 de la notification de connexion *tc_cnx1_ntf* fournie par le générateur 42 de notification de connexion, notamment en fournissant à l'émetteur sur le premier mode de transmission 400, la notification de connexion *8.tc_cnx1_ntf.* Si la connexion du terminal de l'utilisateur au premier mode de transmission n'est pas vérifiée, c'est-à-dire si le terminal de l'utilisateur 1 n'est pas connecté au premier mode de transmission 3₁, alors l'analyseur 401 déclenche un détecteur de connexion du terminal de l'utilisateur au premier mode de transmission. Notamment, soit l'émetteur au terminal de l'utilisateur 40, soit le moniteur du premier mode de transmission 43 (comme illustré par la figure 4) comporte le détecteur 430 de connexion du terminal de l'utilisateur au premier mode de transmission. Le détecteur 430 de connexion du terminal de l'utilisateur au premier mode de transmission déclenche *7.snd_trg* la fourniture par l'analyseur 401 à l'émetteur sur le premier mode de transmission 400, de la notification de connexion *8.tc_cnx1_ntf* fournie par le générateur 42 de notification de connexion, qui la transmet alors au terminal de l'utilisateur 1. En particulier, le moniteur 43 du premier mode de transmission comporte aussi l'analyseur 401 et le détecteur 430 de connexion du terminal de l'utilisateur au premier mode de transmission. Dans l'exemple illustré par la figure 4, un même détecteur 430 est utilisé par le serveur de messagerie pour détecter la connexion au premier mode de transmission 3₁ du terminal de l'utilisateur 1 et du terminal du contact 2. Cela est notamment possible lorsque le terminal de l'utilisateur 1 et le terminal du contact 2 partagent le même serveur de messagerie 4. Eventuellement, le serveur de messagerie 4 peut comporter des détecteurs de connexion au premier mode de transmission distincts pour le terminal de l'utilisateur et le terminal du contact (non illustré). Notamment, lorsque le serveur de messagerie 4 est le serveur de messagerie du terminal de l'utilisateur 1 et que le terminal du contact 2 dispose d'un autre serveur de messagerie sur le premier mode de transmission 3₁, le serveur de messagerie 4 peut comporter deux détecteurs de connexion au premier mode de transmission distincts. L'avantage est que le détecteur de connexion du terminal de l'utilisateur peut comporter un simple moniteur des messages d'enregistrement du terminal de l'utilisateur reçu par le serveur de messagerie, alors que le détecteur de connexion du terminal du contact comportera un détecteur de tous les messages en provenance du terminal du contact reçu par le serveur de messagerie 4 du terminal de l'utilisateur : message utile à un terminal d'un interlocuteur (non illustré) partageant avec le terminal de l'utilisateur le serveur de messagerie 4, message de révocation d'un message stocké sur le serveur de messagerie 4, etc.

La figure 5 illustre un diagramme d'échange de messages dans le cas où le terminal de l'utilisateur est déconnecté du premier mode de transmission lorsque le terminal d'un contact se reconnecte au premier mode de transmission, selon l'invention. La figure 5 reprend le cas d'usage de la figure 1b mais avec la mise en oeuvre de l'invention. Ainsi, le terminal de l'utilisateur TU envoie au terminal d'un contact TC un premier message mssg1 sur un réseau par défaut : le premier mode de transmission, *snd1(mssg1).*

Le terminal du contact TC n'étant pas connecté au premier mode de transmission : TC≠cnx₁, le serveur de messagerie du terminal du contact SM_{C} reçoit le premier message mssg1 et le stocke notamment dans une mémoire temporaire ou une base de données de message BDD_MSSG en vue de le transférer au terminal du contact lorsqu'il sera à nouveau connecté au premier mode de transmission. Le terminal de l'utilisateur TU déclenche alors un décompte d'un laps de temps prédéterminé à l'expiration duquel, si le premier message mssg1 n'a pas été transmis par le serveur de messagerie SM_{C} au terminal du contact TC, le terminal de l'utilisateur TU envoie une révocation du transfert du premier message au serveur de messagerie SM_{C :} *Revoke(mssg1).* Ainsi, le premier message mssg1 est supprimé de la mémoire BDD_MSSG du serveur de messagerie SM_{C}. De manière concomitante, le terminal de l'utilisateur TU bascule dans un deuxième mode de transmission pour le terminal du contact MT(tc)=MT2, puis retransmet le premier message via le deuxième mode de transmission (cette fois-ci) : *send2(mssg1),* en l'occurrence sous forme SMS. Quand le terminal de l'utilisateur TU émet un deuxième message mssg2 à destination du terminal du contact TC, il le fait toujours sur le deuxième mode de transmission : *send2(mssg2)* puisque le terminal de l'utilisateur est toujours dans le deuxième mode de transmission pour le terminal du contact MT(tc)=MT2.

Après que le terminal du contact se soit reconnecté au premier mode de transmission TC=cnx₁, il envoi sur le réseau par défaut, à savoir le premier mode de transmission, un troisième message au terminal de l'utilisateur TU : *snd1(mssg3).* Si à ce moment-là, le terminal de l'utilisateur TU est déconnecté du premier mode de transmission TU≠cnx1, alors le troisième message ne sera pas remis au terminal de l'utilisateur TU via le premier mode de transmission. Le terminal de l'utilisateur TU n'étant pas connecté au premier mode de transmission : TU≠cnx₁, le serveur de messagerie du terminal de l'utilisateur SM_{U} reçoit le troisième message mssg3 et le stocke notamment dans une mémoire temporaire ou une base de données de message BDD_MSSG en vue de le transférer au terminal de l'utilisateur TU lorsqu'il sera à nouveau connecté au premier mode de transmission. Le terminal du contact TC déclenche alors un décompte d'un laps de temps prédéterminé à l'expiration duquel, si le troisième message mssg3 n'a pas été transmis par le serveur de messagerie SM_{U} au terminal de l'utilisateur TU, le terminal du contact TC envoie une révocation du transfert du troisième message au serveur de messagerie SM_{U :} *Revoke(mssg3).* Ainsi, le troisième message mssg3 est supprimé de la mémoire BDD_MSSG du serveur de messagerie SM_{U}. De manière concomitante, le terminal du contact TC bascule dans un deuxième mode de transmission pour le terminal de l'utilisateur MT(tu)=MT2, puis retransmet le troisième message via le deuxième mode de transmission (cette fois-ci) : *send2(mssg3),* en l'occurrence sous forme SMS.

Si, le terminal de l'utilisateur TU retrouve sa couverture par le premier mode de transmission, c'est-à-dire s'il est à nouveau connecté au premier mode de transmission, alors le terminal TU envoie, par exemple, un message d'enregistrement sur le premier mode de transmission *reg* au serveur de messagerie SM_{U}. Alors, le procédé de gestion de messages selon l'invention transmet SND alors au terminal de l'utilisateur TU une notification *tc_cnx1_nft* indiquant que le terminal du contact à retrouver sa connexion. Le procédé de gestion de messages selon l'invention illustré par la figure 5 comporte une détection de la connexion du terminal du contact au premier mode de transmission, notamment par détection soit d'un message mssg3 du terminal du contact TC au terminal de l'utilisateur TU via le premier mode de transmission MT1, soit du message de révocation revoke(mssg3) de ce message mssg3, et, suite à cette détection, une émission SND d'une notification *tc_cnx1_nft* de connexion au premier mode de transmission du terminal du contact conditionné par une détection de connexion au premier mode de transmission du terminal de l'utilisateur, en l'occurrence par réception d'un message d'enregistrement *reg.* Le terminal de l'utilisateur TU activera alors un retour au premier mode de transmission, dans le cas de la norme RCS un retour au « Chat », c'est-à-dire à la messagerie instantanée sur IP, et transmettra un quatrième message en utilisant le premier mode de transmission : *send1(mssg4)* puisque les deux terminaux : le terminal de l'utilisateur TU et le terminal du contact TC sont connecté au premier mode de transmission. Puis, le terminal du contact TC (qui avait lui-même basculé dans un deuxième mode de transmission MT2 pour le terminal de l'utilisateur TU) recevant ce quatrième message mssg 4 du terminal de l'utilisateur TU sur le premier mode de transmission basculera, comme prévu par la norme RCS, dans le premier mode de transmission pour poursuivre la conversation sur le premier mode de transmission en transmettant un cinquième message *snd1(mssg5).*

Dans cet exemple, c'est la connaissance par le serveur de messagerie SM_{U} du terminal de l'utilisateur de l'état de connectivité sur le premier mode de transmission du terminal du contact TC et du terminal de l'utilisateur TU qui entraine la remise de la notification de connexion tc_cnx1_ntf au terminal de l'utilisateur TU. En l'occurrence, c'est respectivement la détection d'un message du terminal du contact vers le terminal de l'utilisateur ou la réception du message de révocation, c'est-à-dire la réception de la commande d'effacement d'un message de la fonction « Store&Forward » de la norme RCS, provenant du terminal du contact TC et la réception du message d'enregistrement du terminal de l'utilisateur au premier mode de transmission, qui déclenche l'émission par le serveur de messagerie SM_{U} au terminal de l'utilisateur TU d'une notification déclenchant le retour du terminal de l'utilisateur TU dans le mode de transmission par défaut pour ses échanges de message avec le terminal du contact TC.

La figure 6 illustre un diagramme d'échange de messages dans le cas où le serveur de messagerie du terminal de l'utilisateur détecte un message sur le premier mode de transmission du terminal d'un contact, selon l'invention. Le terminal de l'utilisateur TU envoie au terminal d'un contact TC un premier message mssg1 sur un réseau par défaut : le premier mode de transmission, *snd1(mssg1).* Le terminal du contact TC n'étant pas connecté au premier mode de transmission : TC≠cnx₁, le serveur de messagerie du terminal du contact SM_{C} reçoit le premier message mssg1 et le stocke notamment dans une mémoire temporaire ou une base de données de message BDD_MSSG en vue de le transférer au terminal du contact lorsqu'il sera à nouveau connecté au premier mode de transmission. Le terminal de l'utilisateur TU déclenche alors un décompte d'un laps de temps prédéterminé à l'expiration duquel, si le premier message mssg1 n'a pas été transmis par le serveur de messagerie SM_{C} au terminal du contact TC, le terminal de l'utilisateur TU envoie une révocation du transfert du premier message au serveur de messagerie SM_{C :} *Revoke(mssg1).* Ainsi, le premier message mssg1 est supprimé de la mémoire BDD_MSSG du serveur de messagerie SM_{C}. De manière concomitante, le terminal de l'utilisateur TU bascule dans un deuxième mode de transmission pour le terminal du contact MT(tc)=MT2, puis retransmet le premier message via le deuxième mode de transmission (cette fois-ci) : *send2(mssg1),* en l'occurrence sous forme SMS. Quand le terminal de l'utilisateur TU émet un deuxième message mssg2 à destination du terminal du contact TC, il le fait toujours sur le deuxième mode de transmission : *send2(mssg2)* puisque le terminal de l'utilisateur est toujours dans le deuxième mode de transmission pour le terminal du contact MT(tc)=MT2.

Si le terminal du contact TC retrouve alors la connexion au premier mode de transmission : TC≠cnx₁, il peut émettre *snd1(mssg3)* sur le premier mode de transmission un troisième message à destination d'un terminal d'un interlocuteur TCC différent du terminal de l'utilisateur TU. Si le terminal de l'interlocuteur TCC et le terminal de l'utilisateur TU partage le même serveur de messagerie SM_{U}, alors le serveur de messagerie peut détecter la connexion au premier mode de transmission du terminal du contact TC dès ce troisième message *mssg3* et ne pas attendre la réception par le terminal de l'utilisateur TU d'un message du terminal du contact TC via le premier mode de transmission comme illustré par la figure1b. Le serveur de messagerie SM_{U} détectant la connexion au premier mode de transmission du terminal du contact TC, envoie SND une notification tc_cnx1_ntf au terminal de l'utilisateur TU. Le terminal de l'utilisateur TU bascule alors dans le mode de transmission par défaut, c'est-à-dire une transmission sur le premier mode de transmission, et peut, dès à présent, envoyer *snd1(mssg4)* un quatrième message au terminal du contact sur le premier mode de transmission.

Par conséquent, la figure 6 montre que la notification de connexion permet de revenir le plus tôt possible sur le réseau par défaut pour les échanges de messages.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur. D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé d'échange de messages mis en oeuvre par un terminal (TU, 1) d'un utilisateur apte à transmettre un message (mssg, mssg1, mssg2, mssg4) via un mode de transmission parmi : un premier mode de transmission (MT1) et un deuxième mode de transmission (MT2), le procédé d'échange de messages comporte, lorsque le terminal de l'utilisateur (TU, 1) est dans un deuxième mode de transmission (MT2) pour un terminal d'un contact (TC, 2), un déclenchement d'un basculement (SWT_TRG) du terminal de l'utilisateur (TU, 1) dans un premier mode de transmission (MT1) pour le terminal du contact (TC, 2) dès réception d'une notification (tc_cnx₁_ntf) au terminal de l'utilisateur (TU, 1) de connexion au premier mode de transmission (MT1) du terminal du contact (TC, 2) provenant d'un serveur de messagerie (SM_{U}, 4) sur le premier mode de transmission (MT1), la notification (tc_ cnx₁_ntf) de connexion étant émise par le serveur de messagerie au terminal de l'utilisateur (TU, 1) dès réception d'un message du terminal du contact (TC, 2) via le premier mode de transmission (MT1).

2. Procédé d'échange de messages selon la revendication précédente, **caractérisé en ce que** le déclenchement du basculement (SWT_TRG) est effectué suite à une détection, par le serveur de messagerie, de connexion du terminal du contact (TC, 2) au premier mode de transmission (MT1).

3. Procédé d'échange de messages selon l'une quelconque des revendications précédentes **caractérisé en ce que** le premier mode de transmission (MT1) est un mode de transmission par données mobiles et le deuxième mode de transmission (MT2) un réseau circuit.

4. Dispositif de communication de messages (11) d'un terminal d'un utilisateur (TU, 1), le dispositif de communication (11) apte à transmettre un message (mssg, mssg1, mssg2, mssg4) via un mode de transmission parmi : un premier mode de transmission (MT1) et un deuxième mode de transmission (MT2), le dispositif de communication (11) comportant un contrôleur (12) apte à déclencher (cmd), sur réception d'une notification (tc_ cnx₁_ntf) au terminal de l'utilisateur (TU, 1) de connexion au premier mode de transmission (MT1) d'un terminal d'un contact provenant d'un serveur de messagerie (SM_{U}, 4) sur le premier mode de transmission (MT1), un basculement du terminal de l'utilisateur (TU, 1) dans un premier mode de transmission (MT1) pour le terminal du contact (TC, 2), lorsque le terminal de l'utilisateur (TU, 1) est dans un deuxième mode de transmission (MT2) pour un terminal d'un contact (TC, 2), la notification (tc_cnx₁_ntf) de connexion étant reçue par le terminal de l'utilisateur (TU, 1) du serveur de messagerie dès réception d'un message du terminal du contact (TC, 2) via le premier mode de transmission (MT1).

5. Terminal d'un utilisateur (TU, 1) comportant un dispositif de communication de messages (11) apte à transmettre un message (mssg, mssg1, mssg2, mssg4) via un mode de transmission parmi : un premier mode de transmission (MT1) et un deuxième mode de transmission (MT2), le terminal de l'utilisateur (TU, 1) comportant un contrôleur (12) apte à déclencher (cmd), sur réception d'une notification (tc_cnx₁_ntf) au terminal de l'utilisateur (TU, 1) de connexion au premier mode de transmission (MT1) d'un terminal d'un contact provenant d'un serveur de messagerie (SM_{U}, 4) sur le premier mode de transmission (MT1), un basculement du terminal de l'utilisateur (TU, 1) dans un premier mode de transmission (MT1) pour le terminal du contact (TC, 2), lorsque le terminal de l'utilisateur (TU, 1) est dans un deuxième mode de transmission (MT2) pour un terminal d'un contact (TC, 2), la notification (tc_cnx₁_ntf) de connexion étant reçue par le terminal de l'utilisateur (TU, 1) du serveur de messagerie dès réception d'un message du terminal du contact (TC, 2) via le premier mode de transmission (MT1).

6. Procédé de gestion de messages mis en oeuvre par un serveur de messagerie (SM_{U}, 4) sur un premier mode de transmission (MT1), le procédé de gestion de messages (PGM) comporte, lorsqu'un terminal d'un utilisateur (TU, 1) est dans un deuxième mode de transmission (MT2) pour un terminal d'un contact (TC, 2), une émission (SND) au terminal de l'utilisateur (TU, 1) d'une notification (tc_cnx1_ntf) de connexion au premier mode de transmission (MT1) du terminal du contact (TC, 2) dès réception d'un message du terminal du contact (TC, 2) via le premier mode de transmission (MT1), la notification (tc_cnx₁_ntf) de connexion déclenchant un basculement (SWT_TRG) du terminal de l'utilisateur (TU, 1) dans un premier mode de transmission (MT1) pour le terminal du contact (TC, 2).

7. Procédé de gestion de messages selon la revendication précédente, **caractérisé en ce que** le procédé de gestion de messages (PGM) comporte, lorsqu'un terminal d'un utilisateur (TU, 1) est dans un deuxième mode de transmission (MT2) pour un terminal d'un contact (TC, 2), une détection d'une connexion au premier mode de transmission (TC_CNX₁_DTCT) du terminal du contact (TC, 2), suite à laquelle l'émission (SND) de la notification (tc_ cnx1_ntf) de connexion est effectuée.

8. Procédé de gestion de messages (PGM) selon la revendication précédente, **caractérisé en ce que** la détection de connexion au premier mode de transmission (TC_CNX₁_DTCT) du terminal du contact (TC, 2) comporte une détection d'un message (mssg) provenant du terminal du contact (TC, 2) via le premier mode de transmission (MT1).

9. Procédé de gestion de messages (PGM) selon l'une quelconque des revendications 7 ou 8, **caractérisé en ce que** la détection de connexion au premier mode de transmission (TC_CNX₁_DTCT) du terminal du contact (TC, 2) comporte une détection d'une réception par le serveur de messagerie d'un message de commande de suppression d'un message stocké sur le serveur de messagerie (revoke_mssg), le message de commande (revoke_mssg) provenant du terminal du contact (TC, 2).

10. Procédé de gestion de messages selon l'une quelconque des revendications 6 à 9, **caractérisé en ce que** le procédé de gestion de messages (PGM) comporte, lorsqu'un terminal d'un utilisateur (TU, 1) est dans un deuxième mode de transmission (MT2) pour un terminal d'un contact (TC, 2), une génération d'une notification de connexion au premier mode de transmission (MT1) d'un terminal d'un contact d'un terminal d'un utilisateur (NTF_{TU}_GN), la génération de la notification de connexion (NTF_{TU}_GN) fournissant la notification (tc_cnx₁_ntf) de connexion générée à l'émission (SND) au terminal de l'utilisateur (TU, 1).

11. Procédé de gestion de messages selon la revendication précédente, **caractérisé en ce que** la génération de notification de connexion (NTF_{TU}_GN) est déclenchée (gn_trg) par un évènement relatif à une connexion au premier mode de transmission (MT1) du terminal du contact (TC, 2) parmi:
• La détection de connexion au premier mode de transmission du terminal du contact (TC_CNX₁_DTCT);
• Un basculement (TU_MT2_DTCT) dans un deuxième mode de transmission (MT2) du terminal de l'utilisateur (TU, 1) pour le terminal du contact (TC, 2).

12. Procédé de gestion de messages selon l'une quelconque des revendications 10 ou 11, **caractérisé en ce qu'**une mise en oeuvre de l'émission de la notification (tc_cnx₁_ntf) est fonction d'un état de connexion au premier mode de transmission (MT1) du terminal de l'utilisateur (TU, 1).

13. Programme comprenant des instructions de code de programme pour l'exécution des étapes du procédé d'échange de messages selon l'une quelconque des revendications 1 à 3, et/ou du procédé de gestion de messages selon l'une quelconques des revendications 6 à 13 lorsque ledit programme est exécuté par un processeur.

14. Serveur de messagerie (4) d'un premier mode de transmission (3₁) comportant un émetteur (400₁) permettant d'émettre, lorsqu'un terminal d'un utilisateur (1) est dans un deuxième mode de transmission (3₂) pour un terminal d'un contact (2), vers le terminal de l'utilisateur (1) une notification (tc_cnx₁_ntf) de connexion au premier mode de transmission (3i) du terminal du contact (2) dès réception d'un message du terminal du contact (2) via le premier mode de transmission (3₁), la notification (tc_cnx₁_ntf) de connexion déclenchant (cmd) un basculement du terminal de l'utilisateur (1) dans un premier mode de transmission (3₁) pour le terminal du contact (2).

15. Serveur de messagerie (4) d'un premier mode de transmission (3₁) selon la revendication précédente, **caractérisé en ce que** le serveur de messagerie (4) comporte un détecteur (430) de connexion au premier mode de transmission (3₁) d'un terminal d'un contact (2) apte à déclencher une émission par l'émetteur (400₁) de la notification (tc_cnx₁_ntf) de connexion.
